(19) Europäisches Patentamt

European Patent Office

Office européen des brevets

(11) Veröffentlichungsnummer: **0 466 658 B1**

# (12) EUROPÄISCHE PATENTSCHRIFT

(45) Veröffentlichungstag der Patentschrift: **20.09.95**

(21) Anmeldenummer: **91810570.1**

(22) Anmeldetag: **15.07.91**

(51) Int. Cl.6: **A01B 79/00**, A01B 45/02,
A01B 49/04, A01G 1/00,
E01C 13/00

(54) Verfahren zum Bebauen, Pflegen und/oder Verbessern von Kulturböden.

(30) Priorität: **13.07.90 CH 2354/90**

(43) Veröffentlichungstag der Anmeldung:
**15.01.92 Patentblatt 92/03**

(45) Bekanntmachung des Hinweises auf die
Patenterteilung:
**20.09.95 Patentblatt 95/38**

(84) Benannte Vertragsstaaten:
**AT CH DE ES FR GB IT LI NL**

(56) Entgegenhaltungen:
EP-A- 0 046 855    EP-A- 0 127 549
WO-A-83/02969    DE-B- 1 272 612
DE-B- 1 286 801    DE-C- 40 937
FR-A- 2 609 593    US-A- 4 506 739

(73) Patentinhaber: **ANALYSA BODENBERATUNG
+ UMWELTTECHNIK AG
Kirchbühlstrasse 2
CH-3515 Oberdiessbach (CH)**

(72) Erfinder: **Habegger, Ernst
Kirchbühlstrasse 43
CH-3515 Oberdiessbach (CH)**

(74) Vertreter: **Keller, René, Dr. et al
Keller & Partner
Patentanwälte AG
Marktgasse 31
Postfach
CH-3000 Bern 7 (CH)**

**Beschreibung**

**Technisches Gebiet**

Die Erfindung bezieht sich auf ein Verfahren zum Bebauen, Pflegen und/oder Verbessern von Kulturböden, insbesondere von Grünflächen, bei dem im Boden mindestens ein langer, schmaler, rinnenförmiger Schlitz in den sonst in seiner Bodenstruktur unbearbeitet belassenen Boden angebracht wird. Die Erfindung bezieht sich auch auf eine Vorrichtung zur Durchführung eines solchen Verfahrens.

**Stand der Technik**

Die heutige Bodennutzung im Garten- und Landschaftsbau sowie in der Landwirtschaft führt zu immer mehr Problemen, die sich in einer gestörten Bodenfruchtbarkeit, übermässiger Bodenerosion und in einer Bodenverseuchung niederschlagen. Die Ursachen sind unterschiedlichster Natur. Bodenverdichtungen, die z. B. durch zu schwere Maschinen oder falsche Bodenbearbeitung bedingt sein können, führen zu gestörtem Wasser- und Lufthaushalt in der Kulturerdschicht. Die Bodenverseuchung kann auf ungeeignet resp. falsch eingesetzten Dünge- resp. Pflanzenschutzmitteln beruhen.

Mangelhaft begrünte Böden sind bekanntlich durch Witterungseinflüsse erosionsgefährdet. Bei Sportrasenflächen ergibt sich eine ungenügende Strapazierfähigkeit. Ausserdem ist die Regenerationsfähigkeit von Rasengräsern bei gestörten Bodenverhältnissen reduziert.

Es ist bekannt, dass ein ausgewogener Wasser- und Lufthaushalt des Bodens und seine Bodenstruktur zentral für die Fruchtbarkeit sind. Schwere, bindige Böden, z. B. Tonböden, neigen durch das Befahren resp. durch das Bespielen (bei Sportrasen) und bei unsachgemässer Bearbeitung zur Verdichtung und sind nur wenig wasserdurchlässig. Sandige Böden verfügen über ein geringes Wasserrückhaltevermögen und sind im Gegensatz zu tonigen Böden stark wasserdurchlässig.

Bei belasteten Böden, wie z. B. bei Sportrasenflächen, muss zur Erhaltung der optimalen physikalischen Bodenverhältnisse (optimaler Wasser-/Lufthaushalt) der Wurzelraum regelmässig bearbeitet (gelockert) werden.

Im Buch "Plastoponik - Schaumkunststoffe in der Agrarwirtschaft", H. Baumann, Dr. Alfred Hüthig Verlag Heidelberg, 1967, ist eine grosse Zahl von Versuchen beschrieben, bei denen die Speicherfähigkeit des Bodens für Wasser durch Schaumkunststoffe gezielt erhöht worden ist. So sind z. B. in Kuwait öde, sandige Böden dadurch begrünt worden, dass Gräben in einer Tiefe von 2 m und einer Breite von 1.35 m ausgehoben wurden, in verschiedenen Tiefen von 0.5, 1.0, 1.5 und 2 m Schaumkunststoffschichten eingespritzt und dann mit Sand überdeckt wurden. Auf den wieder zugedeckten Gräben wurden dann Pflanzen gesetzt. Es zeigte sich, dass durch diese Massnahmen beträchtliche Wassermengen eingespart werden konnten (vgl . Seiten 65-70 des Buches).

Auf Seiten 122-126 des Buches werden Versuche zur Bodenmelioration mittels eingespritzter Schaumkunststoffe beschrieben. Ziel war es, die Wasserkapazität grober Sande und die Durchlüftung schwerer Böden zwecks Erhöhung der Ertragsfähigkeit zu verbessern. Bei Baumanpflanzungen wurde deshalb Schaumkunststoff mit Hilfe einer Tieflockerungsschar in den Boden eingebracht. Es zeigte sich dabei, dass ein direktes Einschäumen der Wurzeln der Obstbäume keinen Erfolg brachte, wenn nicht eine Wurzelbehandlung vorausging. Dagegen zeigte sich, dass sich der Schaumkunststoff beim Tieflockern der Fahrspuren bewährte, da die Bodenverdichtung aufgehoben war und die Wurzeln durch den Schaumkunststoff hindurchwachsen konnten.

Auf Seiten 71-75 des genannten Buches werden Versuche auf Teneriffa beschrieben. Dort wurden breite, nebeneinander verlaufende, lange Pflanzenfurchen eines neuangelegten Tomatenfeldes mit Schaumkunststoff in einer Stärke von 5 cm und einer Breite von 20 cm ausgespritzt und dann mit Erde zugehäufelt. In die Dämme wurden Tomatenjungpflanzen eingesetzt und anschliessend durch Anstauung des Wassers in den Furchen gewässert. Dadurch konnte der Schaumkunststoff eine grosse Menge an Wasser aufsaugen und speichern, um es dann über einen längeren Zeitraum den Pflanzen zur Verfügung zu stellen.

Neben diesen Anwendungen, bei denen der Schaumkunststoff stets vor Ort aufgeschäumt wird, gibt es auch noch andersartige Einsatzmöglichkeiten. Von der Firma Compo GmbH, D-4400 Münster, beispielsweise werden unter der Bezeichnung "Hygromull" resp. "Hygropor" geflockte, organisch synthetische Harzschaumstoffe vertrieben, die zur Boden- und Substratverbesserung verwendet werden können. Je nach Zusammensetzung der geflockten Schaumkunststoffe können die genannten Produkte zur Verbesserung leichter bis mittlerer Freiland- resp. Gewächshausböden oder zur Verbesserung schwerer Böden sowie zur langfristigen Stabilisierung von Substraten eingesetzt werden.

Sowohl im Gartenbau als auch in der Landwirtschaft werden Böden von alters her durch Aufhacken und Zerteilen in kleine Krumen gelockert. Es gibt auch Maschinen, die den Boden flächenmässig zerhacken. Der Nachteil dieser Bodenlockerungsmethoden besteht darin, dass sie entweder nur zu Beginn einer Vegetationsperiode, wenn noch keine Pflanzen wachsen, oder dann zwar gezielt in bereits bestehenden Kulturen, aber nur von Hand, durchgeführt werden können.

Aus dem Buch "Rasen", Frank Hoppe, Ulmer Fachbuch Garten- und Landschaftsbau, 1983, sind besondere Verfahren zur Pflege von Sportrasenflächen, sowie Vorrichtungen zur Durchführung solcher Verfahren bekannt. Auf Seiten 177-182 wird unter anderem ein Verfahren zum Aerifizieren von Rasenflächen beschrieben. Dabei werden z. B. Zinken oder Messer waagerecht durch den Boden gezogen und so nebeneinander verlaufende Schlitze bis zu 20 cm Tiefe eingebracht. Ebenso wird eine Maschine mit Scheibenmessern und Druckrollen zum Andrücken der Schlitzkanten beschrieben. Schliesslich können auch einzelne Schlitze einer Tiefe von 75-100 mm mit dreieckigen Messern in den Boden geschnitten werden. Die Schlitze haben eine Länge von 10-20 cm und eine Breite von bis zu 5 mm. Die Schlitzgeräte werden im Frühjahr zu Beginn der Hauptwachsungszeit und im Herbst zum Ende der Vegetationsperiode eingesetzt.

Aus der FR 2 609 593 ist ein Verfahren zur Amelioration, Unterhaltung und Verbesserung von mit Rasen bepflanzten Böden bekannt. Aus dieser Druckschrift sind die Merkmale der Oberbegriffe der Ansprüche 1 und 13 bekannt. Das Terrain wird mit Mikroschlitzen einer Tiefe zwischen 4 und 15 cm, einer Breite zwischen 1 und 3 cm und einem gegenseitigen Abstand von 15 bis 25 cm versehen. In den Boden der Schlitze wird granulatförmiger Dünger eingestreut. Der ganze verbleibende Rest der Schlitze wird mit kieselartigem Sand gefüllt. Auf diese Weise soll die Entwässerung des Bodens gesichert werden.

**Darstellung der Erfindung**

Aufgabe der Erfindung ist es nun, ein Verfahren der eingangs genannten Art anzugeben, mit dem der Boden auf rationelle Weise bebaut, gepflegt und/oder verbessert werden kann. Insbesondere soll mit dem erfindungsgemässen Verfahren eine wirkungsvolle Pflege von Sportrasenflächen möglich sein. Schliesslich soll die Erfindung auch eine Vorrichtung zur Durchführung eines solchen Verfahrens angeben.

Das erfindungsgemässe Verfahren zeichnet sich dadurch aus, dass nachträglich mindestens ein Schlitz teilweise mit einem Schaumkunststoff ausgefüllt wird, so dass ein nach oben durch den Schaumkunststoff abgeschlossener Bodenhohlraum entsteht zwecks Bildung eines wachstumsfördernden Mikroklimas. Vorzugsweise werden zusätzlich gezielt und selektiv flüssige, feste oder gasförmige Stoffe wie Düngemittel, Bodenverbesserungsmittel, Bodenwirkstoffe und/oder Saatgut eingebracht.

Der wesentliche Punkt der Erfindung liegt darin, dass die Schlitze nicht eine eigenständige, endgültige Massnahme der Bodenpflege sind, sondern nur eine notwendige Voraussetzung für einen nachfolgenden, in die Tiefe gehenden weiteren Verfahrensschritt. Die Schlitze werden also dazu benutzt, etwas in den Boden einzubringen. Es kann sich dabei ebensogut um mineralische wie auch um organische resp. mineralisch-organische Substanzen handeln. Es ist zu beachten, dass gemäss der Erfindung die in den Boden einzubringenden Materialien oder Substanzen in dünne Schlitze und nicht in breite Furchen oder ausgedehnte Löcher deponiert werden.

Durch das Anbringen der Schlitze wird der Boden nämlich nicht flächenmässig gelockert resp. umgepflügt, sondern nur lokal mit schmalen, linienförmigen Belüftungsspalten versehen. Da die Schlitze sehr dünn sind und einen Abstand haben, der viel grösser als ihre Breite ist, wird der Boden durch die Bearbeitungsmassnahmen nicht destabilisiert. Die bereits bestehende (eventuell spärliche) Bepflanzung hat somit nicht unter dem Bearbeitungsverfahren zu leiden. Vielmehr wird ihr Wurzelwerk besser belüftet. Die Abstände der Schlitze sind andererseits genügend klein, dass eine flächenmässige Wirkung der Bodenbelüftung und der nachfolgend eingespritzten Substanzen zustande kommen kann.

Die Schlitze wirken in Verbindung mit den erfindungsgemäss nachfolgenden Behandlungsschritten in subtiler Weise auf die Bodenstruktur ein. Bekanntlich besteht unter normalen Verhältnissen ein Boden etwa zur Hälfte seines Volumens aus Poren (Hohlräumen), die mit Wasser oder Luft gefüllt sind. Dieser Zustand wird nicht durch ein wahlloses Gemisch fester, flüssiger und gasförmiger Bodenbestandteile (mineralische und organische Substanzen, Wasser und Luft) erreicht. Vielmehr bilden die Bodenteilchen unter komplizierten chemisch-physikalischen Vorgängen einen organisierten Bodenkörper (Bodenmaterial). Das Bodengefüge, unter welchem die räumliche Anordnung der unregelmässig geformten festen Bodenbestandteile zu verstehen sind, stellt somit im Boden ein Gerüst dar, das für die Wasser- und Luftverhältnisse weitgehend bestimmend ist. Die Stabilität des Bodengefüges ist weitgehend von der Bodenart abhängig. Eine besonders gute Gefügestabilität findet man bei Böden mit hohen Ton- und Siltgehalten. Schlechte Voraussetzungen zur Bildung eines guten Bodengefüges bieten reine Silt- und/oder Sandböden.

Bei Rasensportplätzen gilt es nun, ein (mehr oder weniger) stabiles Gleichgewicht zwischen Bodenfestigkeit und Wasser-/Luftgehalt zu finden. Während sich der Sportler nämlich eine feste Unterlage wünscht, benötigt die Vegetation einen ausgewogenen Wasser- resp. Lufthaushalt in der Kulturerde resp. Rasenvegetationstragschicht, um gedeihen zu können. Wenn nun eine Rasenfläche so präpariert ist, dass sie sich im Bereich des gewünschten Gleichgewichts befindet, dann ist es wichtig, dass die Bodenpflege resp. Verbesserung in subtil angepasster Weise auf die physikalischen, chemischen und biologischen Eigenschaften des Bodens Einfluss nimmt. Und gerade das kann mit der Erfindung erreicht werden.

Gemäss der Erfindung können einzelne oder mehrere in Abständen von weniger als 50 cm, vorzugsweise weniger als 20 cm nebeneinander verlaufende Schlitze in den Boden eingefräst werden. Einzelne Schlitze dürften insbesondere bei reinen Bodenbefestigungsmassnahmen von Interesse sein. Wenn es darum geht, eine Pflanzenkultur zu pflegen resp. zu verbessern, dann werden in der Regel viele, die bearbeitete Bodenfläche in ganzer Länge linienförmig durchziehende Schlitze angebracht. Die Schlitztiefe beträgt in jedem Fall weniger als 1 m. Beim Belüften von Rasenflächen und dergleichen beträgt die Schlitztiefe vorzugsweise weniger als 30 cm.

Die Schlitze haben vorzugsweise ein U-förmiges Profil. Ihre Tiefe ist in der Regel grösser als ihre Breite. Vorzugsweise beträgt die Tiefe ein Vielfaches der Breite. Auf jeden Fall sind sie weniger breit als 10 cm. Besonders vorteilhaft sind Schlitzbreiten im Bereich von 3-20 mm, weil die Festigkeit des Bodens dadurch sozusagen nicht beeinträchtigt wird. Schlitzbreiten von mehr als 20 mm können aber bei ganz bestimmten Bodenbefestigungs- und Entwässerungsmassnahmen (Präparation von Rasenflugplätzen) vorkommen.

Eine flächenmässige Wirkung lässt sich in der Regel mit gegenseitigen Abständen von weniger als 20 cm, vorzugsweise von 5-10 cm, erreichen. Der Abstand der Schlitze beträgt also mit Vorteil mindestens das Fünffache der Schlitzbreite.

Die erfindungsgemässen Schlitze dienen als Ausgangsbasis für die verschiedensten Nachbearbeitungsschritte. Im folgenden werden die wichtigsten davon aufgezählt.

Um einen lockeren, speicherfähigen, aber trotzdem stabilen Boden zu erhalten, werden die Schlitze zumindest teilweise mit einem Schaumkunststoff ausgespritzt. Besonders vorteilhaft ist es, wenn der Schaumkunststoff nur in den oberen Bereich der Schlitze eingebracht wird, so dass im unteren Bereich der Schlitze ein nach oben verschlossener Bodenhohlraum entsteht. In diesem Hohlraum kann sich ein besonders günstiges, wachstumsförderndes Mikroklima einstellen.

Der Schlitz wird in der Regel auf seiner ganzen Länge ausgespritzt. Es ist aber durchaus auch möglich, ihn nur abschnittsweise resp. in verschiedenen Abschnitten alternierend verschiedene Schaumkunststoffe einzuspritzen. Im Zusammenhang mit der weiter unten beschriebenen Einsaat kann es durchaus auch vorteilhaft sein, Schlitze mit relativ geringer Eindringtiefe nur im unteren Bereich auszuschäumen.

Mit besonderem Vorteil wird ein gemischtzelliger Schaumkunststoff, insbesondere ein HF-Schaum, zum Ausspritzen der Schlitze verwendet. Durch den Anteil von 60-70 % offener und 30-40 % geschlossener Zellen (bei einem Poren-Volumen von ca. 95 %) ergibt sich ein guter Ausgleich zwischen Speicherkapazität und Stabilität.

Gemäss einer spezifischen Ausführungsform der Erfindung wird mindestens ein Schlitz ganz mit einem stabilen, im wesentlichen geschlossenzelligen, inkompressiblen Schaumkunststoff, insbesondere mit Polystyrol ausgespritzt. Damit lassen sich mechanisch stark beanspruchte Böden (wie z. B. Rasenflugplätze) wirkungsvoll befestigen.

Ein weiterer vorteilhafter Bearbeitungsschritt besteht darin, dass in die Schlitze Düngemittel eingebracht resp. eingespritzt wird. Das Düngemittel kann entweder im Schaumkunststoff eingelagert sein oder mit einer separaten Düse in den z. B. unteren Bereich der Schlitze eingespritzt werden. Dadurch wird das Düngemittel gezielt in den Wurzelraum der Pflanzen eingebracht.

Anstelle oder in Verbindung mit dem Düngemittel können auch Bodenwirkstoffe und/oder Bodenverbesserungsmittel schlitztief eingebracht (eingespritzt oder eingestreut) werden. Welche Einzelmassnahme oder Kombination von Behandlungsschritten anzuwenden ist, hängt vom Zustand des zu bearbeitenden Bodens ab.

Wenn es z. B. darum geht, lückenhafte Grünflächen zu verbessern, dann kann in die Schlitze resp. in den nach oben nicht verschlossenen Teil der Schlitze Saatgut gezielt eingestreut oder eingespritzt werden (Einsaat). Auf diese Weise werden die Nachteile behoben, die entstehen, wenn Saatgut einfach auf bereits teilweise begrünte Flächen gestreut wird (Austrocknung der keimenden Samen). Der Hauptteil der ausgestreuten Saat fällt dann nicht mehr wirkungslos auf die vorhandenen Pflanzen, sondern wird gezielt auf die vorbereiteten, fruchtbaren Streifen gestreut.

Schlitze, die im Hinblick auf eine Einsaat gemacht werden, brauchen nicht besonders tief zu sein. Wichtig ist, dass sie das Bodenmaterial (Bodenkörper) anritzen. Auf jeden Fall sollten sie durch eine allfällig

4

vorhandene Rohhumusschicht hindurchdringen. In der Regel sind die für den genannten Zweck angebrachten Schlitze weniger als 3 cm breit und dringen weniger als 3 cm in das Bodenmaterial ein. Wahlweise kann vor oder nach dem Einstreuen des Saatgut ein Schaumband als Substrat resp. als Schutzdecke in die flachen Schlitze eingespritzt werden.

Die Erfindung beinhaltet auch ein Verfahren, bei dem vor dem Anbringen der Schlitze ein Bodenverbesserungsmittel wie z. B. Sand auf den Boden ausgestreut wird und bei dem nach dem Anbringen der Schlitze das Bodenverbesserungsmittel zwecks Ausebnung der Oberfläche und Einarbeitung in die Schlitze zusammen mit einem beim Herstellen der Schlitze entstandenen Fräsauswurf auf dem Boden verteilt resp. in die Schlitze (z. B. mit einem Schleppnetz) eingezogen wird und auf der Bodenoberfläche angepresst wird.

Gemäss der Erfindung kann der Boden auch kreuzweise mit Schlitzen überzogen werden. Die beiden sich kreuzenden Schlitzgruppen haben unterschiedliche Schlitztiefen und kreuzen sich vorzugsweise im rechten Winkel . Die tiefen Schlitze dienen dabei z. B. zum Einbringen eines Bodenverbesserungsmittels, während in die weniger tiefen Schlitze Saatgut eingestreut wird.

Eine Vorrichtung zur Durchführung des Verfahrens zeichnet sich durch ein Schlitzgerät zum Anbringen von mehreren, nebeneinander verlaufenden Schlitzen und durch in die Schlitze einsenkbare Düsen zum Einbringen von Düngemittel, Bodenverbesserungsmittel , Bodenwirkstoffen und/oder Schaumkunststoffen aus.

Vorzugsweise hat die Vorrichtung mehrere, auf einer gemeinsamen, horizontalen, in der Höhe verstellbar gelagerten Rotationsachse parallel zueinander angeordnete Fräsrotoren. Die Fräsrotoren sind mit geeignet dünnen Messern oder Diamantblättern bestückt und können auf eine bestimmte Tiefe abgesenkt werden, so dass die gewünschten Schlitze ausgefräst werden.

Vorzugsweise ist die Vorrichtung mit weiteren Geräten zum Durchführen zusätzlicher Bearbeitungsschritte bestückt.

So kann z. B. hinter den Fräsrotoren eine Reihe von Düsen zum Ausspritzen von Schaumkunststoff in die unmittelbar vorher in den Boden eingebrachten Schlitze angeordnet sein. Die Düsen sind so ausgebildet resp. angeordnet, dass sie in den oberen Bereich der Schlitze im Bedarfsfall hineinragen.

Zusätzlich oder alternativ kann hinter den Fräsrotoren eine Reihe von Düsen zum Einspritzen von Düngemittel in die unmittelbar vorher eingebrachten Schlitze angeordnet sein. Die Düsen sind vorzugsweise so ausgebildet, dass sie im Bedarfsfall in den unteren Bereich der Schlitze hineinragen.

Besonders bevorzugt ist eine Vorrichtung, bei der hinter dem Schlitzgerät für jeden Schlitz mindestens zwei Düsen mit individuell einstellbarer Einsenktiefe vorgesehen sind. Auf diese Weise können mindestens zwei verschiedene Substanzen in den Schlitz eingebracht werden. Insbesondere sind die Düsen an einer der Bewegungsrichtung abgewandten Schmalseite eines scheibenförmigen Führungselementes (Schar) angeordnet. Das Führungselement dient sowohl zur Stabilisierung als auch zur Führung der Düsen resp. der entsprechenden Rohrzuführungen.

Die Vorrichtung kann auch in vorteilhafter Weise mit Geräten zur Bearbeitung der Erdoberfläche (Pflanzenschutzmittelversprüher, Düngerstreuer, Rütteleggen, Wischer, Krümlerwalzen etc.) bestückt werden.

Die Reihen von Düsen sind vorzugsweise für den Fall des Nichtgebrauchs ausschwenkbar gelagert.

Die Vorrichtung kann als selbstangetriebenes Fahrzeug oder als Anhängegerät an ein Zugfahrzeug ausgebildet sein. Im letzteren Fall ist sie vorzugsweise höhenverstellbar auf Gleitkufen gelagert.

Insbesondere beim Pflegen und Verbessern von grünen Sportflächen (z. B. von Fussballfeldern, Tennisplätzen oder sonstigen Spielbahnen) ist es vorteilhaft, wenn mit einer Rüttelegge und einer Krümlerwalze der Auswurf eventuell zusammen mit aufgestreutem Sand auf der Bodenoberfläche verteilt und festgepresst wird.

Aus den Patentansprüchen und der nachfolgenden Beschreibung ergeben sich weitere bevorzugte Ausführungsformen resp. Merkmalskombinationen der Erfindung.

**Kurze Beschreibung der Zeichnungen**

Nachfolgend soll die Erfindung anhand von Ausführungsbeispielen und im Zusammenhang mit den Zeichnungen näher erläutert werden. Es zeigen:

Fig. 1    Eine schematische Darstellung eines Schnitts durch einen erfindungsgemäss geschlitzten Boden;

Fig. 2    einen erfindungsgemäss geschlitzten Boden in der Draufsicht;

Fig. 3    eine schematische Darstellung einer Vorrichtung zur Durchführung erfindungsgemässer Bodenbearbeitungsverfahren;

Fig. 4    eine schematische Darstellung der am Ende von Rohren angeordneten, von einem Führungselement gehaltenen Düsen zum Einspritzen fester, flüssiger oder gasförmiger Stoffe.

In den Figuren sind grundsätzlich gleiche Teile mit gleichen Bezugszeichen versehen.

**Wege zur Ausführung der Erfindung**

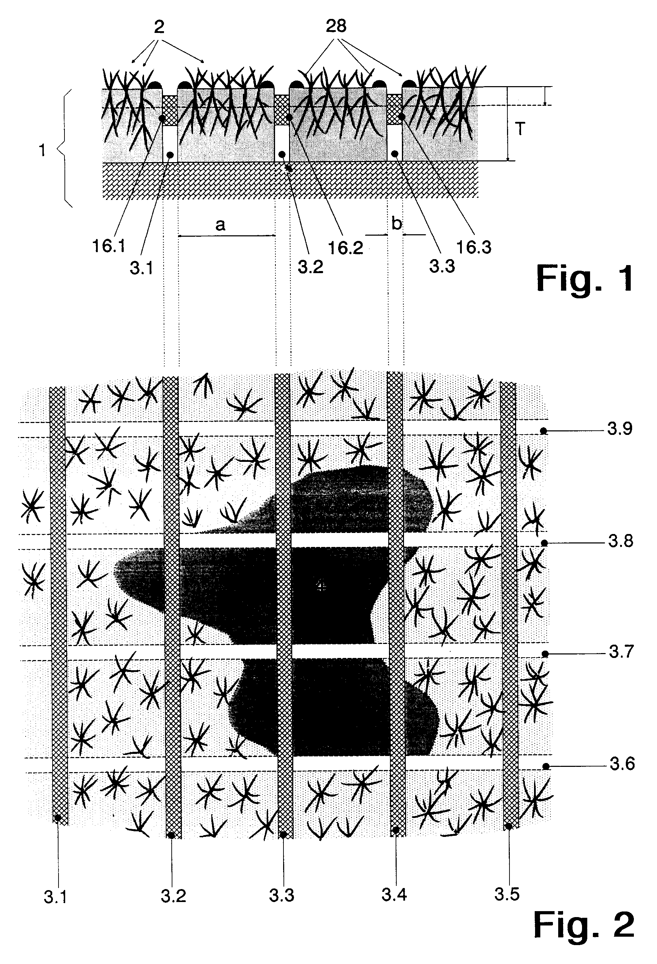

Fig. 1 und 2 zeigen den erfindungsgemäss bearbeiteten Boden im Schnitt resp. in der Draufsicht. Ausgangspunkt des Bearbeitungsverfahrens ist ein zumindest teilweise bepflanzter Boden 1. Mehr oder weniger dicht wachsende Pflanzen 2 (z. B. Gräser) durchdringen mit ihren Wurzeln den Boden 1 und verleihen ihm dadurch Festigkeit. Aufgrund von Verdichtungen, die z. B. durch die intensive Nutzung durch die Sportler bedingt sind, hat sich die Bodenstruktur verschlechtert. Zudem ist die Grünfläche mit unerwünschten vegetationsarmen Bereichen 4 durchsetzt. Ziel ist es nun, die Bodenverdichtungen auf ein für die Pflanzen erträgliches Mass zu reduzieren und vegetationsarme Bereiche 4 nachzubegrünen.

Gemäss der Erfindung werden nun z. B. in regelmässigen Abständen d Schlitze 3.1-3.5 einer bestimmten Breite b und einer bestimmten Tiefe T in den Boden eingefräst. Die einzelnen Schlitze verlaufen im wesentlichen parallel nebeneinander und durchziehen die gesamte bearbeitete Fläche linienförmig. Wie in Fig. 2 schematisch angedeutet, trennen die Schlitze 3.1-3.5 den bearbeiteten Boden in lange, gleichmässige Streifen auf. In diesen zwischen den Schlitzen 3.1-3.5 liegenden Streifen ist der Boden 1 nicht bearbeitet. Das heisst, die Bodenstruktur und der Wurzelraum der Pflanzen sind unversehrt belassen. Selbstverständlich werden dadurch Oberflächenbehandlungen nicht ausgeschlossen. Es geht nur darum, dass die durch die Wurzeln geschaffene Festigkeit des Bodens nicht zerstört oder beeinträchtigt wird.

Die Schlitze sind im Profil U-förmig. Das heisst, sie haben mehr oder weniger vertikale Seitenwände und sind verhältnismässig tief. Sie sind in der Regel lang, schmal und tief. Ihre Breite beträgt vorzugsweise 3-15 mm. Ihre Tiefe hängt von der zu pflegenden Vegetation ab. Typischerweise dürfte sie ca. 15 cm betragen. In aller Regel kann bei der Sportrasenpflege mit weniger als 30 cm Tiefe der beabsichtigte, erfindungsgemässe Effekt erzielt werden. Wenn der Boden nur zwecks Nachbegrünung geschlitzt wird, dann genügen durchaus sehr kleine Tiefen im Bereich von wenigen cm (z. B. 1-3 cm).

Der in der Regel gleichmässige Abstand d zwischen den benachbarten Schlitzen 3.1, 3.2 ist viel grösser als die Breite b der Schlitze. Um die gewünschte flächenmässige Wirkung (durch das gleichmässige Ueberziehen des Bodens mit Schlitzen) zu erzielen, sollte der gegenseitige Abstand d weniger als 50 cm betragen. Vorzugsweise liegt er in einem Bereich zwischen 5 und 15 cm. Zu geringe Abstände zerstören das Wurzelwerk der Pflanzen und damit auch die Festigkeit des Bodens, und zu grosse Abstände haben eine zu geringe flächenmässige Wirkung.

Die Schlitze lockern den Boden auf und belüften ihn. Wenn sie nicht stabilisiert werden, dann wachsen sie mit der Zeit zu, wobei das Erdreich aber insgesamt gelockert ist. Gemäss der Erfindung werden nun in die frischen Schlitze zusätzlich Substanzen eingebracht.

Gemäss einer besonders bevorzugten Ausführungsform werden zur Stabilisierung der eingebrachten Schlitze 3.1-3.3 geeignete Schaumkunststoffe 16.1-16.3 eingespritzt. Diese Schaumkunststoffe 16.1-16.3 werden z. B. in die obere Hälfte der Schlitze 3.1-3.3 eingespritzt und füllen ihn vorzugsweise zu einem Drittel auf. Der Schaumkunststoff nimmt im eingespritzten Zustand eine bandförmige Gestalt an und deckt den Schlitz in ganzer Länge ab. Der eingespritzte Schaumkunststoff stabilisiert damit den Schlitz und verhindert aufgrund seiner Wasserspeicherfähigkeit dessen Austrocknen.

Eine optimale Stabilisierung und Verbesserung des Bodens ergibt sich, wenn der Schlitz ganz mit Schaumkunststoff ausgefüllt wird. Unter Berücksichtigung der wirtschaftlichen Aspekte wird der Schlitz dagegen vorzugsweise nur zur Hälfte oder zu einem Drittel ausgefüllt.

Eine andere Massnahme, die sich erfindungsgemäss vorteilhaft mit dem Schlitzen des Bodens verbinden lässt, ist das Einbringen von Bodenwirkstoffen und/oder Bodenverbesserungsmittel. Ein bei der Sportrasenpflege typisches Bodenverbesserungsmittel ist Sand mit einer Korngrösse von bis zu 3 mm. Als Bodenwirkstoff eignet sich z. B. die unter dem Handelsnamen "Agrosil" von der bereits erwähnten Firma Compo vertriebene Substanz. Gemäss der Erfindung werden nun in die frisch gefrästen Schlitze solche Bodenwirkstoffe resp. Bodenverbesserungsmittel eingebracht. Dies kann z. B. durch Einspritzen einer entsprechenden Lösung oder Suspension, oder durch Einblasen oder Einrieseln lassen von pulverförmigen resp. körnigen Substanzen erfolgen.

Eine weitere Massnahme, die entweder nur in Verbindung mit dem Schlitzen oder in Kombination mit den bereits beschriebenen Schritten durchgeführt werden kann, ist das Einbringen von Düngemitteln. Gemäss der Erfindung werden vorzugsweise flüssige Düngemittel schlitztief in den Boden eingespritzt.

Eine besonders vorteilhafte Kombination besteht im Anbringen von nicht besonders tiefen Schlitzen verbunden mit einem nachfolgenden gezielten, selektiven Einstreuen von Saatgut. In diesem Fall sollten die Schlitze nicht sehr tief sein, damit das Saatgut gut gedeihen kann. Es ist dabei wichtig, dass die Schlitze zumindest in das Bodenmaterial (d. h. in den mineralischen Bereich des Bodens) eindringt. Insbesondere gilt es, eine bei Rasenflächen häufig auftretende Rohhumusschicht (Rasenfilz) zu durchtrennen. Der Boden wird also gleichsam nur angeritzt (Schlitztiefe von z. B. 2 cm). Um das Saatgut vor dem Vogelfrass zu schützen und ausreichend mit Feuchtigkeit zu versehen, werden die verhältnismässig flachen Schlitze mit Vorteil mit einem ausgespritzten Schaumkunststoff abgedeckt. Aufgrund der geringen Breite des Schaumkunststoffbandes kann die junge Pflanze problemlos seitlich am Schaumkunststoff vorbei emporwachsen.

In Fig. 1 und 2 sind eine Gruppe von nicht sehr tiefen Schlitzen 3.6-3.9 angedeutet. Wenn die Nachbegrünungsmassnahme zusammen mit den tiefer gehenden Bodenbelüftungsmassnahmen (Schlitze 3.1-3.5) angewendet werden, dann werden die für die Einsaat bestimmten flachen Schlitze vorzugsweise im rechten Winkel zur ersten Gruppe (3.1-3.5) tiefer Schlitze in den Boden eingebracht. Insbesondere in den Kreuzungspunkten finden die Samen optimale Keimungsbedingungen vor, auch wenn die flachen Schlitze 3.6-3.9 nicht mit Schaumkunststoff ausgespritzt werden.

Durch diesen den Schlitz 3.1 im Prinzip auf seiner ganzen Länge bandförmig verschliessenden Schaumkunststoff 16 wird die Bodenstruktur stabilisiert und die Bodenaustrocknung in der Vegetationsschicht 1 verhindert. Der Schaumkunststoff 16 speichert im wesentlichen das eindringende Wasser und gibt es dosiert an die Pflanzen ab. Der Bodenhohlraum 27 dient der Belüftung und Entwässerung der oberflächennahen Bodenschichten. Aufgrund der Wasser- und Luftdurchlässigkeit des Schaumkunststoffs 16 entsteht in ihm ferner ein vorteilhaftes Mikroklima.

Die Eigenschaften und Zusammensetzungen der verwendeten Schaumkunststoffe sind an die Bedürfnisse des Bodens von Fall zu Fall anzupassen. Die vorteilhaften Wirkungen dieser Schaumstoffe beruhen auf ihrer Zellstruktur. Die einzelnen Zellwände bestehen aus mehr oder weniger stark ausgebildeten Membranen. Die Zellen können geschlossen und mit Gas oder Luft gefüllt sein. Sie können aber auch als offene Zellen miteinander in Verbindung stehen, so dass der Schaum gas- und/oder luftdurchlässig ist. Schaumkunststoffe können somit offenzellig, geschlossenzellig oder gemischtzellig sein. Da die offenen Zellen primär für die Wasserspeicherfähigkeit und die geschlossenen Zellen für die Stabilität verantwortlich sind, kann mittels der Wahl der Zellenstruktur resp. der Anteile in Mischstrukturen die gewünschte Wirkung (Stabilität, Saugfähigkeit) im Boden eingestellt werden.

Ein besonders bevorzugter Schaumkunststoff ist der HF-Schaum. Er hat eine gemischtzellige Struktur mit etwa 60-70 % offenen und 30-40 % geschlossenen Zellen. Der HF-Schaum ist aufgrund seiner Kapillarstruktur für den erfindungsgemässen Zweck besonders geeignet, da es fast unmöglich ist, ihn restlos mit Wasser zu füllen. Den Haarwurzeln stehen also immer noch Luftkanäle zur Verfügung, die ein "Ersticken" der Pflanze verhindern. Das im HF-Schaum gespeicherte Wasser ist in seiner Gesamtheit pflanzenverfügbar.

HF-Schaum wird im wesentlichen aus zwei Lösungen hergestellt, nämlich aus einer Schaumlösung und einem modifizierten Harnstoff-Formaldehyd-Harz. Dem aus dem Schaummittel hergestellten Schaum wird noch in der Apparatur das Harnstoff-Formaldehyd-Harz beigemischt. Das Harz lagert sich auf die vorgebildeten Schaumlamellen auf und härtet dort aus.

Alternativ oder in Verbindung mit dem HF-Schaum können auch Polystyrol-, Polyurethan- und Polyvinylchlorid-Schaumstoffe verwendet werden.

Weitere Einzelheiten zu den als solche bekannten Schaumkunststoffen sind der eingangs zitierten Literatur zu entnehmen. Dasselbe ist zu den Aufschäumungsgerätschaften zu sagen.

Mit Vorteil kann im Schaumkunststoff ein Dünger mit Langzeitwirkung eingelagert sein. Die Langzeitwirkung beruht darauf, dass das Düngemittel zuerst aus dem Schaumkunststoff ausgewaschen werden muss, bevor es den Pflanzen zur Verfügung steht.

In ästhetischer Hinsicht ist es zudem vorteilhaft, wenn der Schaumkunststoff geeignet eingefärbt wird, so dass er nicht mehr weiss, sondern bodenähnlich aussieht.

Die vegetationsarmen Bereiche 4 werden dann entlang der Schlitze 3.6-3.9 begrünt. Auch wenn die in der Regel ziemlich kleinen und unregelmässig verstreuten vegetationsarmen Bereiche 4 nicht insgesamt, sondern nur linienförmig begrünt werden, ergibt sich wegen der relativ eng beabstandeten Schlitze 3.6-3.9 trotzdem der Eindruck einer gleichmässigen Bepflanzung. Mit dieser Methode wird das Saatgut in den übrigen, bereits ausreichend bewachsenen Bereichen nicht vergeudet, sondern gezielt auf den durch die Schlitze 3.6-3.9 vorbereiteten Boden aufgebracht.

Ein Bodenverbesserungsverfahren, das z. B. sehr geeignet für Rasenflugplätze ist, besteht im wesentlichen darin, dass ein mechanisch sehr stabiler, schlecht komprimierbarer Schaumkunststoff (wie z. B. Polystyrol) in die tief eingefrästen Schlitze eingespritzt wird. Dies führt zu einer Entlastung der zwischen

7

den Schlitzen liegenden Abschnitte, denn die erstarrten Schaumkunststoffbänder nehmen einen Grossteil der mechanischen Belastung auf und leiten sie in den festen Untergrund ab.

Um einen Eindruck über die vielfältigen Anwendungsmöglichkeiten der Erfindung zu geben, werden im folgenden verschiedene Massnahmenkombinationen aufgelistet. Es handelt sich dabei nicht um eine abschliessende Aufzählung erfindungsgemässer Verfahren.

Folgende Kombinationsmöglichkeiten stehen also aufgrund der Erfindung zur Verfügung:

a) Schlitzen + Tiefendüngen

b) Schlitzen + Schäumen

c) Schlitzen + Tiefendüngen + Schäumen

d) Schlitzen resp. Anreissen + Saatgut einstreuen

e) Schlitzen/Anreissen + Saatgut einstreuen + Schäumen

f) Schlitzen/Anreissen + Schäumen + Saatgut einstreuen

g) kreuzweise Schlitzen mit tiefen und flachen Schlitzen

h) vorgängiges Sanden + Schlitzen + Tiefendüngen und/oder Schäumen + Einwischen

i) Schlitzen + Einbringen von Bodenverbesserungsmittel oder Bodenwirkstoffen

Für den Fachmann ergeben sich aus dieser kurzen Liste noch weitere im Rahmen der Erfindung liegende Kombinationen. Es leuchtet ein, dass mit diesem breiten Spektrum von Möglichkeiten die meisten Boden- und Vegetationsprobleme gelöst werden können.

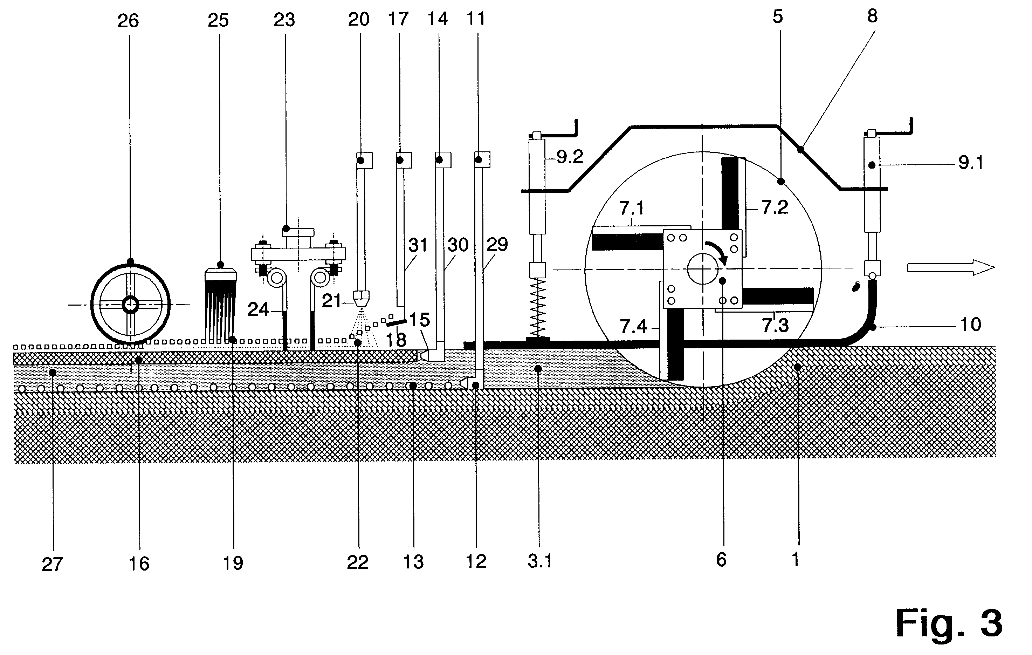

Anhand der Fig. 3, die eine schematische Darstellung einer Vorrichtung zur Durchführung des Verfahrens zeigt, werden die weiteren Bearbeitungsmassnahmen nur noch kurz angedeutet. Die Vorrichtung ist im vorliegenden Beispiel als Anhänger ausgebildet, der an ein Zugfahrzeug (z. B. einen Traktor) angehängt werden kann. In Fahrtrichtung gesehen an vorderster Front (auf der rechten Seite in Fig. 3) befindet sich ein Schlitzgerät mit einer grossen Zahl von Fräsrotoren 5. Die Fräsrotoren 5 sind auf einer gemeinsamen Rotationsachse 6 parallel zueinander fixiert. Ihr gegenseitiger Abstand entspricht dem Abstand d der einzubringenden Schlitze 3.1-3.5 (Fig. 2). Sie decken eine Arbeitsbreite von z. B. 2.5 m ab. Bei einem Schlitzabstand von 10 cm sind auf der Rotationsachse 6 somit ca. 25 parallele Fräsrotoren 5 vorzusehen.

Die Rotationsachse 6 ist horizontal gelagert und lässt sich in der Höhe verstellen. Zu diesem Zweck sind z. B. zwei Spindeln 9.1 und 9.2 vorgesehen. Mit ihnen kann die Höhe der in einem Gestell 8 gelagerten Rotationsachse 6 gegenüber den tragenden Kufen 10, welche jeweils zwischen benachbarten Fräsrotoren auf dem Boden aufliegen, stufenlos eingestellt werden.

Die Fräsrotoren 5 weisen z. B. je vier geeignet angeordnete Messer 7.1-7.4 auf. Sie schneiden den Boden von oben nach unten. Der Fräsrotor 5 dreht sich also im gleichen Sinn wie ein in der Zugrichtung mitlaufendes Rad, allerdings mit höherer Winkelgeschwindigkeit. Durch die Breite der Messer wird die Schlitzbreite b bestimmt.

Anstelle der einzelnen Messer des Fräsrotors kann auch eine Diamantfrässcheibe verwendet werden. Gerätetechnisch ist es u. U. vorteilhaft (weil konstruktiv einfach), die Schlitze mit feststehenden, durch den Boden gezogenen Messern zu erzeugen.

Das Schlitzgerät wird vorzugsweise über einen Zapfwellenanschluss vom Zugfahrzeug angetrieben. Es ist dabei vorteilhaft, wenn die Drehzahl des Schlitzgerätes beispielsweise mittels eines Schalt- oder Variatorgetriebes variabel einstellbar ist.

Hinter dem Schlitzgerät sind nun mehrere weitere Bodenbearbeitungsgeräte angeordnet. Sie sind vorzugsweise ausschwenkbar am Anhänger befestigt, so dass sie einerseits (im Bedarfsfall) in einer Arbeitsstellung und andererseits (im Nichtbedarfsfall) in einer Ruhelage (ausgeschwenkt) fixiert werden können. Bereits daraus ergibt sich, dass es für die erfindungsgemässe Bodenpflege resp. -bearbeitung nicht zwingend notwendig, sondern nur vorteilhaft ist, wenn alle Einzelgeräte vorhanden sind.

Gemäss dem besonders bevorzugten Ausführungsbeispiel der Fig. 3 folgt unmittelbar auf das Schlitzgerät ein Düngemittelinjektionsbalken 11. Dieser weist eine Reihe von Rohren 29 auf, die in die Schlitze 3.1 ragen und mit Düsen 12 an den bzgl. der Fahrtrichtung nach hinten gebogenen Enden ausgerüstet sind. Jedem Fräsrotor 5 ist somit eine Düse 12 zugeordnet. Mit den Düsen 12 wird flüssiger Dünger 13 vorzugsweise in den unteren Bereich der Schlitze 3.1 eingespritzt. Der Dünger 12 wird also gezielt in den Wurzelraum der Pflanzen gebracht, wo er im Prinzip ja auch immer benötigt wird. Der Dünger ist z. B. als Flüssigkeit in einem (in der Fig. 3 nicht gezeigten) aufgesetzten Tank gespeichert und wird mittels geeigneter Magnetventile dosiert. Staubförmige Düngemittel können z. B. mittels eines Trägergasstroms eingeblasen werden.

Mit den Düsen 12 des Düngemittelinjektionsbalkens 11 können damit flüssige und gegebenenfalls auch feste (z. B. staubförmige) Substanzen schlitztief in den Boden eingebracht werden. Unter "Substanzen" sind an dieser Stelle nicht nur Düngemittel im weitesten Sinn, sondern auch Vitamine, Wirkstoffe und Bodenverbesserer (z. B. Agrosil) zu verstehen.

Als nächstes folgt ein Schäumungsbalken 14. Auch dieser weist eine Reihe von bezüglich der Fräsrotoren 5 ausgerichteten und zumindest in den oberen Bereich der Schlitze 3.1 ragenden Rohren 30 mit Düsen 15 an den Enden auf. Mit den Düsen 15 kann ein in seiner Zusammensetzung an und für sich bekannter Schaumkunststoff 16 so in die Schlitze 3.1 eingespritzt werden, dass im unteren Bereich der Schlitze ein nach oben abgeschlossener Bodenhohlraum 27 entsteht. Der Schaumkunststoff wird unmittelbar auf dem Anhänger (d. h. vor Ort) aus seinen Komponenten gemischt und aufgeschäumt. Für jede Komponente ist somit ein Behälter vorzusehen. Der Inhalt der verschiedenen Behälter wird unter Verwendung geeigneter Ventile dosiert, zusammengeführt und mit Druck in die Schlitze eingespritzt.

Nach dem Schäumungsbalken 14 folgt ein Streubalken 17. Der Streubalken 17 weist ebenfalls eine Reihe von nach unten ragenden Rohren 31 mit Streuern 18 am Ende auf. Mit den Streuern 18 (d. h. mit geeigneten Umlenkblechen) kann z. B. Saatgut 19 in den Schlitz 3.1 resp. den nach oben offenen Teil des Schlitzes 3.1 eingestreut werden. Selbstverständlich können mit dem Streubalken 17 auch andere feste, körnige Substanzen (bei Bedarf flächenmässig) auf den bearbeiteten Boden gestreut werden.

Die am Düngemittelinjektionsbalken 11 und am Schäumungsbalken 14 vorgesehenen Reihen von nach unten ragenden Rohren 29 resp. 30 sind auf einer Linie mit dem jeweils zugeordneten Fräsrotor 5 angeordnet. Die Rohre 31 des Streubalkens 17 dagegen sind nur vorzugsweise, aber nicht zwingend auf die Fräsrotoren ausgerichtet.

An 5. Stelle folgt ein Sprühbalken 20 mit mehreren Verteilerdüsen 21. Damit können beliebige flüssige, gasförmige oder staubförmige Produkte wie z. B. Dünger oder Pflanzenschutzmittel 22 auf die bestehenden Pflanzen versprüht werden.

Damit sind alle erfindungsgemässen chemischen resp. biologischen Verfahrensschritte bei der Pflanzenpflege abgeschlossen. Gemäss einer bevorzugten Ausführungsform sind nun noch einige mechanische Verfahrensschritte nachgeschaltet.

Mit einer Rüttelegge 23, deren rotierende Federzinken 24 auf der Bodenoberfläche anstehen, wird der auf dem Schlitz 3.1 ausgetretene Schaumkunststoff bodeneben entfernt und mit dem Fräsauswurf 28, der beim Fräsen der Schlitze 3.1-3.5 an die Oberfläche befördert worden ist, vermischt (vgl. Fig. 1). Darauf folgt ein Wischer 25, der die ganze Mischung gleichmässig auf dem Boden verteilt. Eine zuhinterst angeordnete Krümlerwalze 26 presst die erwähnte Mischung fest.

Insbesondere bei Sportplätzen und ähnlichen, stark beanspruchten Grünanlagen kann es vorteilhaft sein, vor dem Schlitzen den Boden mit Sand zu bestreuen, der dann durch die erfindungsgemässe mechanische Bearbeitung in den Boden leicht eingearbeitet wird und die Bodenqualität erhöht.

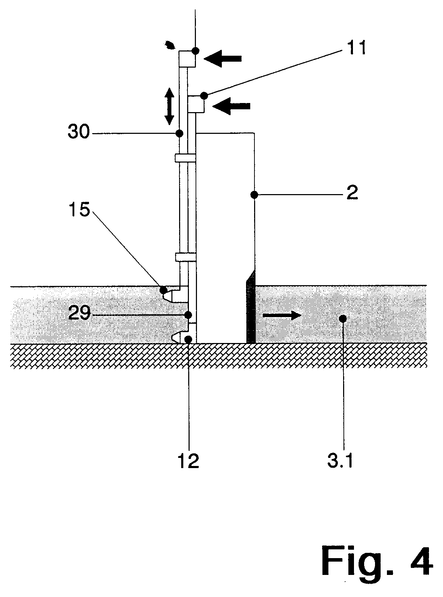

Fig. 4 zeigt eine bevorzugte Ausführung des Düngemittelinjektions- und des Schäumungsbalken 11 resp. 14. Gemäss der Erfindung sind für jeden Schlitz 3.1 etc. zwei am unteren Ende eines jeweiligen Rohres 29 resp. 30 angebrachte Düsen 12 resp. 15 vorgesehen. Die Rohre 29 resp. 30 sind sehr dünn (z. B. 10 mm) und werden deshalb von einem z. B. länglichen, rechteckigen Führungselement 32 fixiert. Das eine Rohr 29 ist fest mit dem plattenförmigen Führungselement 32 verbunden. Das heisst, die entsprechende Düse 12 befindet sich fix am unteren Ende der längsseitigen, bezüglich der Fahrtrichtung hinteren Kante des Führungselements 32. Wenn das Führungselement also mit seiner unteren Kante entlang des Schlitzbodens gezogen wird, dann ist auch die Düse 12 in maximaler Tiefe eingesenkt.

Das zweite Rohr 30 ist gegenüber dem ersten (29) in vertikaler Richtung verschiebbar. Es ist mit einer dafür geeigneten Halterung am Führungselement 32 befestigt. Die beiden Düsen 12 und 15 lassen sich somit mit ihrem vertikalen Abstand auf die gewünschte Schlitztiefe einstellen. In einem Arbeitsdurchgang können also sowohl Substanzen (Düngemittel, Bodenverbesserungsmittel etc.) eingespritzt, als auch ein Schaumband angebracht werden. Das Führungselement 32 sorgt dabei für eine saubere Führung im entsprechenden Schlitz.

Es versteht sich, dass die Düsen 12 und 15 nicht auf das Einspritzen der im vorliegenden Beispiel erwähnten Stoffe resp. Schäume beschränkt sind. Es ist z. B. auch durchaus möglich, dass die untere Düse 12 für den Schaum und die obere (in ihrer Einsenktiefe einstellbare) Düse 15 zum Einspritzen von Saatgut verwendet wird. Ebenso kann wahlweise nur eine der beiden eingesetzt werden, wenn z. B. nur Dünger oder nur Schaum eingebracht werden soll.

Gemäss einer bevorzugten Ausführungsform der Erfindung sind eine Vielzahl von gleichen Schlitzbearbeitungseinheiten (Rohre 29, 30; Düsen 12, 15; Führungselement 32) nebeneinander auf der Vorrichtung gemäss Fig. 3 angeordnet. Sie sind derart befestigt, dass sie mit einer gemeinsamen Mechanik zur Höhenverstellung auf die benötigte Einsenktiefe eingestellt werden können.

Natürlich ist es auch denkbar, z. B. zwei Gruppen von Schlitzbearbeitungseinheiten vorzusehen, die unabhängig voneinander in der Höhe einstellbar sind. Die beiden Gruppen können hintereinander oder in einer Reihe "verzahnt" eingebaut sein. Bei einer sogenannten verzahnten Anordnung müsste sinnvollerweise auch das Schlitzgerät fähig sein, nebeneinander verlaufende Schlitze unterschiedlicher Tiefe zu erzeugen.

Eine aus geeignetem Material (z. B. gehärtetem Stahl) und im zweckdienlicher Form hergestellte Stützplatte kann zugleich die Funktion eines Messers zum Anbringen des Schlitzes übernehmen und so den Fräsrotor ersetzen.

Schliesslich kann die feststehende Düse 12 über ein im Führungselement 32 integriertes Leitungssystem, das anstelle des eigenständigen Rohrs 29 tritt, gespeist werden.

Die Konstruktionsdetails der in Fig. 3 und 4 gezeigten Vorrichtung brauchen im einzelnen nicht erläutert zu werden. Eine erfindungsgemässe Mechanik lässt sich nämlich ohne erfinderisches Zutun aus den obigen Angaben konstruieren.

Fig. 3 und 4 sind in keinem Fall in einschränkender Weise auszulegen. So können z. B. anstelle von Kufen 10 Räder vorgesehen sein. Ebenso ist es möglich, dass die Krümlerwalze 26 selbst als Abstützung der Vorrichtung dient. Vorzugsweise ist der Anpressdruck der Krümlerwalze 26 einstellbar.

Besonders vorteilhaft ist es, wenn die Vorrichtung alle genannten Einzelgeräte aufweist. Dann können nämlich in effizienter Weise alle Verfahrensschritte in einem Arbeitsgang durchgeführt werden. Um eine einfachere Konstruktion zu erhalten, können aber auch einzelne Geräte weggelassen werden. Dies trifft insbesondere für die mechanische Nachbearbeitung (Rüttelegge 23, Wischer 25, Krümlerwalze 26) zu.

In der Landwirtschaft, wo Traktoren ohnehin zur Verfügung stehen, ist es in der Regel günstiger, wenn die Vorrichtung als Anhänger ausgebildet ist. Im Garten- und Landschaftsbau dagegen dürfte die Nachfrage nach einem selbstfahrenden Fahrzeug mit eigenem Antrieb grösser sein.

Zusammenfassend kann festgestellt werden, dass mit der Erfindung effiziente und gezielte Bodenbearbeitungsmassnahmen geschaffen worden sind. Das erfindungsgemässe Schlitzen des Bodens lässt sich wahlweise kombinieren mit dem Einbringen von Düngemittel oder Pflanzenschutzmitteln in den Schlitz, dem Anbringen von Schaumbändern zur Verbesserung des Luft- und Wasserhaushalts, dem Einstreuen von Saatgut in den nach oben offenen Teil der Schlitze und mit dem Bestreuen der bestehenden Pflanzen mit Pflanzenschutzmitteln. Durch den selektiven und kombinierten Einsatz der genannten Massnahmen können die verschiedensten Böden gepflegt und verbessert werden.

Bezugszeichenliste

| 1 | Boden |
|---|---|
| 2 | Pflanzen |
| 3.1-3.5 | Schlitze |
| 4 | Vegetationsarmer Bereich |
| 5 | Fräsrotor |
| 6 | Rotationsachse |
| 7.1-7.4 | Messer |
| 8 | Gestell |
| 9.1, 9.2 | Spindel |
| 10 | Kufe |
| 11 | Düngemittelinjektionsbalken |
| 12 | Düse |
| 13 | Dünger |
| 14 | Schäumungsbalken |
| 15 | Düse |
| 16 | Schaumkunststoff |
| 17 | Streubalken |
| 18 | Streuer |
| 19 | Saatgut |
| 20 | Sprühbalken |
| 21 | Verteilerdüsen |
| 22 | Pflanzenschutzmittel |
| 23 | Rüttelegge |

| 24 | Federzinken |
|---|---|
| 25 | Wischer |
| 26 | Krümlerwalze |
| 27 | Bodenhohlraum |
| 28 | Fräsauswurf |
| 29, 30, 31 | Rohr |
| 32 | Führungselement |
| b | Breite |
| d | Abstand |
| T | Tiefe |

**Patentansprüche**

1. Verfahren zum Bebauen, Pflegen und/oder Verbessern von Kulturböden (1), insbesondere von Grünflächen, bei dem im Boden (1) mindestens ein langer, schmaler, rinnenförmiger Schlitz (3.1-3.5) im sonst in seiner Bodenstruktur unbearbeitet belassenen Boden (1) angebracht wird, dadurch gekennzeichnet, dass nachträglich der mindestens eine Schlitz (3.1 - 3.5) teilweise mit einem Schaumkunststoff (16) ausgefüllt wird, so dass ein nach oben durch den Schaumkunststoff abgeschlossener Bodenhohlraum entsteht zwecks Bildung eines wachstumsfördernden Mikroklimas.

2. Verfahren nach Anspruch 1, dadurch gekennzeichnet, dass der mindestens eine Schlitze (3.1-3.5; 3.6-3.9) ein U-förmiges Profil hat und eine Tiefe von weniger als 1 m, insbesondere weniger als 30 cm hat.

3. Verfahren nach Anspruch 1 oder 2, dadurch gekennzeichnet, dass der mindestens eine Schlitze (3.1-3.5; 3.6-3.9) weniger als 10 cm, insbesondere 3-20 mm, breit ist.

4. Verfahren nach einem der Ansprüche 1 bis 3, dadurch gekennzeichnet, dass mehrere, in Abständen von weniger als 50 cm, vorzugsweise weniger als 20 cm, nebeneinander verlaufende, die bearbeitete Bodenfläche linienförmig durchziehende Schlitze (3.1-3.5; 3.6-3.9) angebracht werden, wobei die Breite (b) der Schlitze (3.1-3.5; 3.6-3.9) viel kleiner als die gegenseitigen Abstände (d) der Schlitze (3.1-3.5; 3.6-3.9) ist.

5. Verfahren nach einem der Ansprüche 1 bis 5, dadurch gekennzeichnet, dass in den mindestens einen Schlitz (3.1 - 3.5; 3.6 - 3.9) zusätzlich gezielt und selektiv flüssige, feste oder gasförmige Stoffe, insbesondere Düngemittel, Bodenverbesserungsmittel, Bodenwirkstoffe und/oder Saatgut eingebracht wird.

6. Verfahren nach Anspruch 4 oder 5, dadurch gekennzeichnet, dass zum Ausspritzen des mindestens einen Schlitzes (3.1-3.5) ein gemischtzelliger Schaumkunststoff (16), insbesondere ein HF-Schaum verwendet wird.

7. Verfahren nach Anspruch 4 oder 5, dadurch gekennzeichnet, dass der mindestens eine Schlitz (3.1-3.5) ganz mit einem stabilen, im wesentlichen geschlossenzelligen Schaumkunststoff, insbesondere Polystyrol, ausgespritzt wird.

12

**8.** Verfahren nach einem der Ansprüche 1 bis 7, dadurch gekennzeichnet, dass in den mindestens einen Schlitz (3.1-3.5) ein Düngemittel (13), ein Bodenwirkstoff und/oder ein Bodenverbesserungsmittel schlitztief eingebracht, vorzugsweise eingespritzt oder eingestreut wird.

**9.** Verfahren nach einem der Ansprüche 1 bis 8, dadurch gekennzeichnet, dass der mindestens eine Schlitz (3.6-3.9) weniger als 3 cm breit ist und weniger als 3 cm in das Bodenmaterial eindringt und dass in diesen mindestens einen Schlitz (3.6-3.9) gezielt Saatgut (19) eingestreut oder eingespritzt wird.

**10.** Verfahren nach Anspruch 9, dadurch gekennzeichnet, dass nach dem gezielten Einstreuen von Saatgut (19) der mindestens eine Schlitz (3.6-3.9) mit einem luft- und wasserdurchlässigen Schaumkunststoff abgedeckt wird.

**11.** Verfahren nach einem der Ansprüche 1 bis 8, dadurch gekennzeichnet, dass vor dem Anbringen des mindestens einen Schlitzes (3.1-3.5; 3.6-3.9) ein Bodenverbesserungsmittel, insbesondere Sand, auf den Boden ausgestreut wird und dass nach dem Anbringen der Schlitze (3.1-3.5) das Bodenverbesserungsmittel zwecks Ausebnung der Oberfläche zusammen mit einem Fräsauswurf (28) auf dem Boden verteilt resp. in die Schlitze eingezogen und angepresst wird.

**12.** Verfahren nach einem der Ansprüche 3 bis 11, dadurch gekennzeichnet, dass mindestens zwei Gruppen von untereinander parallel verlaufenden Schlitzen (3.1-3.5 und 3.6-3.9) sich kreuzend und mit von Gruppe zu Gruppe unterschiedlicher Tiefe angebracht werden.

**13.** Vorrichtung zur Durchführung des Verfahrens nach einem der Ansprüche 1 bis 13, mit einem Schlitzgerät zum Anbringen von mehreren Schlitzen, gekennzeichnet durch mehrere Düsen (12; 15), die so ausgebildet sind, dass sie in die Schlitze einsenkbar sind zum Einbringen von Schaumkunststoffen (16) in die Schlitze (3.1-3.5; 3.6-3.9).

**14.** Vorrichtung nach Anspruch 13, dadurch gekennzeichnet, dass mehrere, auf einer gemeinsamen, horizontalen, in der Höhe vorzugsweise verstellbar gelagerten Rotationsachse (6) parallel zueinander angeordnete Fräsrotoren (5) vorgesehen sind.

**15.** Vorrichtung nach Anspruch 13 oder 14, dadurch gekennzeichnet, dass hinter dem Schlitzgerät für jeden Schlitz mindestens zwei Düsen (12, 15), die in individuell einstellbarer Tiefe einsenkbar sind, vorgesehen sind.

**16.** Vorrichtung nach einem der Ansprüche 13 bis 15, dadurch gekennzeichnet, dass die Düsen (12; 15) an einer der Bewegungsrichtung abgewandten Schmalseite eines plattenförmigen Führungselementes angeordnet sind.

**17.** Vorrichtung nach einem der Ansprüche 13 bis 16, dadurch gekennzeichnet, dass eine Rüttelegge (23) und eine Krümlerwalze (26) zum Verteilen und Anpressen des Fräsauswurfs (28) und des Bodenverbesserungsmittels vorgesehen sind.

**18.** Vorrichtung nach einem der Ansprüche 13 oder 14, dadurch gekennzeichnet, dass sie als Anhänger an ein Zugfahrzeug ausgebildet ist und auf Kufen (10) höhenverstellbar (9.1, 9.2) gleitet.

**Claims**

**1.** Process of cultivating, maintaining and/or improving arable land (1), and in particular green spaces, in the case of which at least one long, narrow, groove-shaped slot (3.1-3.5) is formed in soil (1) the structure of which has otherwise been left undisturbed, characterised in that, subsequently, the at least one slot (3.1-3.5) is partially filled with a foamed plastic (16), such that a hollow which is closed off at the top by the foamed plastic is formed in the soil for the purpose of forming a microclimate which is favourable to growth.

**2.** Process according to Claim 1, characterised in that the at least one slot (3.1-3.5; 3.6-3.9) has a U-shaped profile and a depth of less than 1 m and in particular of less than 30 cm.

3. Process according Claim 1 or Claim 2, characterised in that the at least one slot (3.1-3.5; 3.6-3.9) is less than 10 cm, and in particular 3-20 mm, wide.

4. Process according to one of Claims 1 to 3, characterised in that there are provided a plurality of slots (3.1-3.5; 3.6-3.9) which pass through the soil in the form of lines and which are located at distances of less than 50 cm, and preferably of less than 20 cm, from one another, and extend adjacent one another, in which connection the width (b) of the slots (3.1-3.5; 3.6-3.9) is much smaller than the respective distances (d) between the slots (3.1-3.5; 3.6-3.9).

5. Process according to any one of Claims 1 to 5, characterised in that additionally, in a specific and selective manner, fluid, solid or gaseous substances, in particular manuring agents, ground-improving agents, agent which act on the ground and/or sowing material, are introduced into the at least one slot (3.1-3.5; 3.6-3.9).

6. Process according to Claim 4 or 5, characterised in that a mixed-cell foamed plastic (16), in particular an HF-foam, is used for spraying into the at least one slot (3.1-3.5).

7. Process according to Claim 4 or 5, characterised in that there is sprayed into the at least one slot a stable, substantially closed-cell foamed plastic, in particular polystyrene.

8. Process according to any one of Claims 1 to 7, characterised in that a manuring agent (13), an agent which acts on the soil and/or an agent which improves the soil is introduced into the at least one slot (3.1-3.5) to the depth of the slot, and is preferably sprayed or scattered into it.

9. Process according to any one of Claims 1 to 8, characterised in that the at least one slot (3.6-3.9) is less than 3 cm wide and penetrates less than 3 cm into the soil; and in that sowing material (19) is scattered or sprayed into this at least one slot (3.6-3.9) in a specific manner.

10. Process according to Claim 9, characterised in that when the sowing material (19) has been scattered in in a specific manner, the at least one slot (3.6-3.9) is covered with a foamed plastic that is permeable to air and water.

11. Process according to any one of Claims 1 to 8, characterised in that prior to the introduction of the at least one slot (3.1-3.5; 3.6-3.9) an agent for improving soil, in particular sand, is scattered on the soil; and in that, after the slots (3.1-3.5) have been formed, the agent for improving the soil is, for the purpose of levelling the surface, distributed on the soil together with cutting waste (28) or is drawn into the slot and pressed down.

12. Process according to any one of Claims 3 to 11, characterised in that at least two groups of slots (3.1-3.5 and 3.6-3.9) which extend parallel to one another are formed so that they cross one another and so that they have depths which vary from group to group.

13. Device for performing the process according to any one of Claims 1 to 13, with a slot device for producing a plurality of slots, characterised by a plurality of nozzles (12, 15) which are formed in such a manner that they can be lowered into the slots to introduced foamed plastics (16) into the slots (3.1-3.5; 3.6-3.9).

14. Device according to Claim 13, characterised in that a plurality of cutting motors (5) are provided, disposed on a common horizontal rotational shaft (6) which is advantageously displaceable as regards height, and parallel to one another.

15. Device according to Claim 13 or Claim 14, characterised in that behind the slot device there are provided at least two nozzles (12, 15) for each slot, which nozzles can be sunk into the ground to a depth which is individually settable.

16. Device according to any one of Claims 13 to 15, characterised in that the nozzles (12, 15) are arranged on a narrow side of a plate-shaped guide element, which side faces away from the direction of movement.

14

**17.** Device according to any one of Claims 13 to 16, characterised in that a vibrating device (23) and a roller (26) are provided for spreading and pressing down the cutting waste (28) and the medium for improving the soil.

**18.** Device according to either one of Claims 13 and 14, characterised in that it is formed as a trailer for a towing vehicle, and slides, in a height-displaceable manner, (9.1, 9.2) on runners (10).

**Revendications**

**1.** Procédé destiné à cultiver, entretenir et/ou améliorer des sols de culture (1), notamment des zones vertes, en ménageant dans le sol (1) de ces zones vertes, au moins une bande de grande longueur, étroite, en forme de rigole (3.1-3.5) dont on ne travaille pas la structure, caractérisé en ce qu'ultérieurement au moins une rigole (3.1-3.5) est partiellement remplie de substance alvéolaire ou matière plastique mousse (16) de sorte que l'on obtient un volume creux fermé par le haut par la substance alvéolaire ou matière plastique mousse en vue de la formation d'un microclimat favorisant la croissance.

**2.** Procédé selon la revendication 1, caractérisé en ce qu'au moins une fente (3.1-3.5 ; 3.6-3.9) a un profilé en forme de U et une profondeur inférieure à 1 mètre, en particulier inférieure à 30 cm.

**3.** Procédé selon la revendication 1 ou 2, caractérisé en ce qu'au moins une fente (3.1-3.5 ; 3.6-3.9) a une largeur inférieure à 10 cm, en particulier 3-20 mm.

**4.** Procédé selon l'une des revendication 1 à 3, caractérisé en ce que plusieurs rigoles (3.1-3.5 ; 3.6-3.9) traversant linéairement la surface du sol travaillée s'étendent côte à côte à des intervalles inférieurs à 50 cm, de préférence inférieurs à 20 cm, la largeur (b) des rigoles (3.1-3.5 ; 3.6-3.9) étant beaucoup plus petite que les distances (d) des rigoles entre elles (3.1-3.5 ; 3.6-3.9).

**5.** Procédé selon l'une des revendication 1 à 4, caractérisé en ce que dans au moins une rigole (3.1-3.5 ; 3.6-3.9), sont introduites de façon ciblée et sélective des substances liquides, solides ou gazeuses, en particulier des engrais, des produits d'amendement, des substances actives et/ou des semences.

**6.** Procédé selon la revendication 4 ou 5, caractérisé en ce que pour la pulvérisation d'au moins une rigole (3.1-3.5), on utilise une substance alvéolaire ou matière plastique mousse mixte (16), en particulier une mousse HF.

**7.** Procédé selon la revendication 4 ou 5, caractérisé en ce que l'on pulvérise au moins une rigole (3.1-3.5) entièrement avec une substance alvéolaire stable essentiellement à cellules fermées, en particulier du polystyrène.

**8.** Procédé selon l'une des revendications 1 à 7, caractérisé en ce que dans au moins une rigole (3.1-3.5), on introduit un engrais (13), une substance active et/ou un produit d'amendement du sol dans toute la profondeur de la rigole, de préférence par pulvérisation ou épandage.

**9.** Procédé selon l'une des revendications 1 à 8, caractérisé en ce qu'au moins une rigole (3.6-3.9) a une largeur inférieure à 3 cm et pénètre à moins de 3 cm dans la matière du sol et en ce que dans au moins cette rigole (3.6-3.9), on épand ou on pulvérise de façon ciblée de la semence (19).

**10.** Procédé selon la revendication 9, caractérisé en ce qu'après l'épandage ciblé de la semence (19), au moins la rigole (3.6-3.9) est recouverte d'une substance alvéolaire étanche à l'air et à l'eau.

**11.** Procédé selon l'une des revendications 1 à 8, caractérisé en ce qu'avant de réaliser au moins une rigole (3.1-3.5 ; 3.6-3.9), on épand un produit d'amendement des sols, en particulier du sable, et en ce qu'après la réalisation de la rigole (3.1-3.5), on répartit le produit d'amendement des sols pour égaliser la surface conjointement avec une fraiseuse de labour ou d'éjection (28) sur le sol ou respectivement pour l'introduction dans la rigole et compactage.

**12.** Procédé selon l'une des revendications 3 à 11, caractérisé en ce qu'au moins deux groupes de rigoles s'étendant parallèlement entre elles (3.1-3.5 et 3.6-3.9) sont disposés de façon croisée et d'une profondeur différente d'un groupe de rigoles à l'autre.

**13.** Dispositif pour la réalisation du procédé selon l'une des revendications 1 à 12, avec un dispositif à rigole pour réaliser plusieurs rigoles, caractérisé par plusieurs tuyères (12 ; 15) qui sont conçues de telle sorte à pouvoir s'enfoncer dans la rigole pour l'introduction de substance alvéolaire ou matière plastique mousse (16) dans les rigoles (3.1-3.5 ; 3.6-3.9).

**14.** Dispositif selon la revendication 13, caractérisé en ce qu'il est prévu plusieurs rotors à fraise (5) disposés parallèlement entre eux sur un axe de rotation (6) horizontal commun, de préférence réglable en hauteur.

**15.** Dispositif selon la revendication 13 ou 14, caractérisé en ce qu'en amont de l'appareil à rigole, sont prévues pour chaque rigole au moins deux tuyères (12 ; 15), abaissables selon une profondeur réglable individuellement.

**16.** Dispositif selon l'une des revendications 13 à 15, caractérisé en ce que les tuyères (12 ; 15) sont disposées sur l'un des petits côtés détournés du dispositif de déplacement d'un élément de guidage en forme de plate-forme.

**17.** Dispositif selon l'une des revendications 13 à 16, caractérisé en ce qu'il est prévu une herse vibrante (23) et un rouleau émotteur (26) pour la répartition et le compactage de l'éjecteur à fraise (28) et du produit d'amendement des sols.

**18.** Dispositif selon l'une des revendications 13 ou 14, caractérisé en ce qu'il est conçu sous forme d'appareil à remorquer sur un véhicule de traction et en ce qu'il glisse sur des patins (10) réglables en hauteur (9.1-9.2).

16

**Fig. 1**

**Fig. 2**

Fig. 3

EP 0 466 658 B1

Fig. 4